Europäisches Patentamt

**European Patent Office**

Office européen des brevets

(11) Veröffentlichungsnummer: **0 186 887**
**A2**

(12) # EUROPÄISCHE PATENTANMELDUNG

(21) Anmeldenummer: 85116445.9

(51) Int. Cl.⁴: **H 01 B 1/24,** C 08 K 3/04

(22) Anmeldetag: 21.12.85

(30) Priorität: 02.01.85 US 688413

(43) Veröffentlichungstag der Anmeldung: 09.07.86
Patentblatt 86/28

(84) Benannte Vertragsstaaten: **AT BE CH DE FR GB IT LI LU NL SE**

(71) Anmelder: **DYNAMIT NOBEL AKTIENGESELLSCHAFT, Postfach 1261, D-5210 Troisdorf, Bez. Köln (DE)**

(72) Erfinder: **Leonardi, Nicholas J., 61 Johnson Circle, North Andover Massachusetts 01845 (US)**

(54) Verfahren zum Herstellen eines elektrisch leitfähigen vernetzten Polyolefinschaums und seine Verwendung.

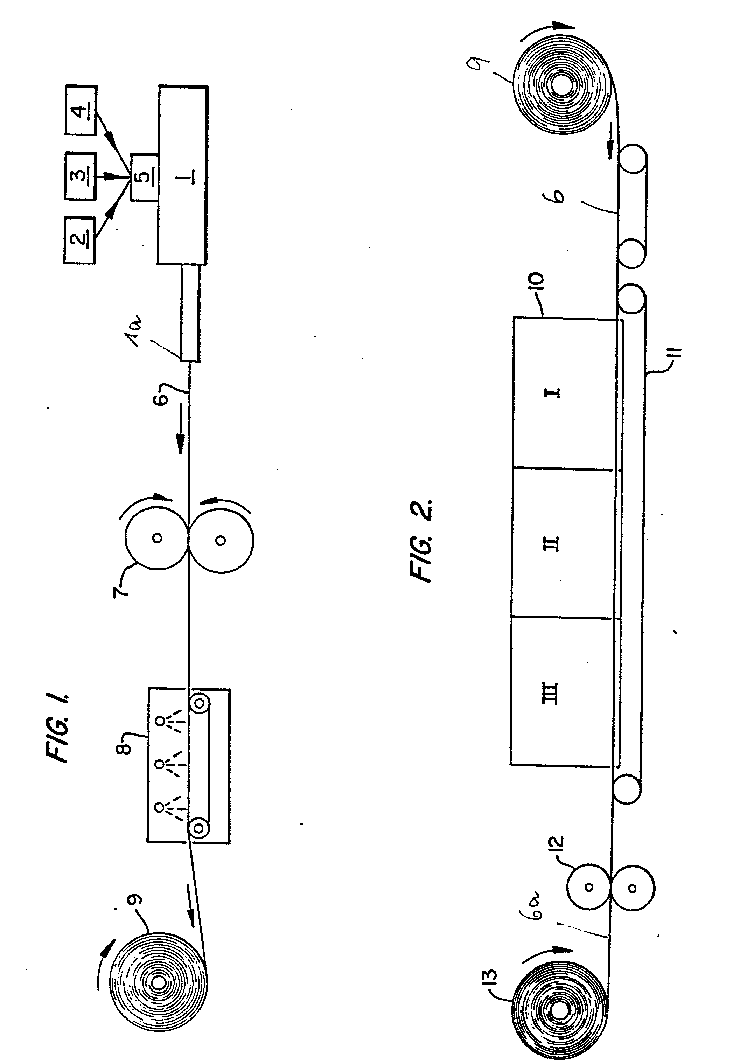

(57) Die Erfindung beschreibt ein Verfahren zum kontinuierlichen Herstellen von elektrisch leitfähigem vernetztem überwiegend geschlossenzelligem Polyolefinschaum in Bahnenform mit einem spezifischen Oberflächenwiderstand von nicht mehr als $10^5$ Ohm durch Extrusion eines nicht verschäumten, nicht vernetzten Vorformlings aus einer Mischung von Polyolefinen, Treibmittel, Vernetzungsmittel und leitfähigem Ruß, der unter Erwärmung vernetzt und verschäumt (Fig. 1).

OZ 85017

Verfahren zum Herstellen eines elektrisch leitfähigen vernetzten Polyolefinschaums und seine Verwendung

Die Erfindung bezieht sich auf ein Verfahren zum Herstellen eines elektrisch leitfähigen vernetzten Polyolefinschaums, bei dem eine Mischung aus Polyolefinen, elektrisch leitfähigem Ruß, Treibmittel, Vernetzungsmittel und ggf. weiteren Zusatz- und Hilfsstoffen unter Anwendung von Druck und Wärme zu einem unvernetzten, nicht verschäumten Vorformling geformt wird und der Vorformling auf eine die Zersetzung des Vernetzungsmittels und Treibmittels bewirkende Temperatur bei Atmosphärendruck erwärmt wird und dabei ein vernetzter Formkörper entsteht.

Es besteht ein großes Bedürfnis, Geräte und Bauelemente der Datenverarbeitung, der Elektro- und Radartechnik, photographische Einrichtungen usw. gegen die nachteiligen Auswirkungen elektrostatischer Aufladungen zu schützen. Die elektrostatische Aufladbarkeit von Körpern wird im wesentlichen von drei Faktoren bestimmt, dem elektrischen Oberflächen- und Durchgangswiderstand, der Dielektrizitätskonstanten und vom Umgebungsmedium des Prüfkörpers.

In sicherheitstechnischer Hinsicht gilt ein Werkstoff als nicht mehr aufladbar, wenn sein Oberflächenwiderstand beim Normklima $23^0$C/ 50% relative Feuchte kleiner als $10^9$ Ohm ist oder unter extremen Bedinungen $10^{11}$ Ohm nicht überschreitet.

Es ist bekannt, durch Inkorporation leitfähigkeitserhöhender Substanzen, wie z.B. Ruß, Kunststoffe permanent antistatisch auszurüsten. Die Anwendung elektrisch leitfähiger Kunststoffe wird beispielsweise in der Zeitschrift Kunstoffberater 5/1984, Seiten 40 und 41 dargelegt. Ein leitfähiges Kunststoffmaterial sollte nach allgemeiner Praxis und z.B. nach der Definition des Handbuchs DOD-HDBK-263, Mai 2,1980, Titel 'Electrostatic Discharge Control Handbook for Protection of Electrical and Electronic Parts Assemblies and Equipment ( Excluding Electrical-Initiated Explosive Devices)', herausgegeben vom Department of Defense der Vereinigten Staaten von Amerika,einen spezifischen Oberflächenwiderstand von nicht mehr als $10^5$ Ohm aufweisen.

Eine Aufgabe der Erfindung ist darin zu sehen, einen elektrisch leitfähigen Schaum zu entwickeln, der als Grundmaterial zur Weiterverarbeitung zu eine elektrostatische Aufladung verhindernden Produkten, beispielsweise Verpackungen, Auskleidungen oder dergl. geeignet ist.

Aus der DE-OS 29 40 260 ist bereits ein Verfahren zum Herstellen von elektrisch leitfähigem Polyurethanweichschaum-Kunststoff bekannt, bei dem PUR-Schaumpartikel

mit einem Bindemittel benetzt werden, anschließend ein elektrisch leitfähiges Rußpulver hinzugefügt und diese Mischung zu Blöcken oder Formteilen verpreßt wird.

Aus der japanischen Offenlegungsschrift 58 19 8537/A ist ein Verfahren gemäß Gattungsbegriff bekannt geworden, bei dem in einem diskontinuierlichen Verfahren elektrisch leitfähige vernetzte Polyolefinschaumblöcke hergestellt werden, wobei das Verschäumen und Vernetzen entweder gleichzeitig oder zuerst das Verschäumen und später das Vernetzen erfolgen. Dieses Verfahren ist sehr aufwendig durch die Blockherstellung.

Der Erfindung liegt die weitere Aufgabe zugrunde, einen elektrisch leitfähigen vernetzten Polyolefinschaum zu schaffen, der kontinuierlich hergestellt werden kann, und der in einfacher Weise insbesondere durch Anwendung bekannter Preßtechniken zu beliebigen Formkörpern geformt werden kann.

Aus der EP-OS 00 72 536 ist ein kontinuierliches Verfahren zum Herstellen eines leitfähigen Polyolefinschaum bekannt, der durch Extrusionsverschäumen hergestellt wird, jedoch unvernetzt ist.

Da vernetzte Polyolefinschäume den unvernetzten in einer Reihe von Eigenschaften überlegen sind, ist es wünschenswert, auch einen vernetzten leitfähigen Polyolefinschaum kontinuierlich herzustellen. Da es bekannt ist, dass der Zusatz von Ruß auch bei Polyolefinen durchweg zu einer erheblichen Verschlechterung der Fließfähigkeit führt, war es überraschend, daß es gemäß dem Vorschlag der Erfindung gelungen ist, auch einen vernetzten leitfähigen Polyolefinschaumstoff in einem kontinuierlichen Verfahren unter Anwendung der Extrusion herzustellen.

Das erfindungsgemäße Verfahren zeichnet sich dadurch aus, dass die Polyolefinmischung bei einer unterhalb der Zersetzungstemperaturen von Vernetzungsmittel und Treibmittel liegenden Temperatur und über der Schmelztemperatur des Polyolefins liegenden Temperatur kontinuierlich zu einem bahnförmigen Vorformling extrudiert wird und der Vorformling stufenweise erwärmt wird, wobei jede Folgestufe eine höhere Temperatur aufweist und die Vernetzung des Vorformlings vor dem Verschäumen einsetzt.

Das erfindungsgemäße Verfahren ermöglicht die Herstellung eines elektrisch leitfähigen vernetzten Polyolefinschaumes mit einer Dichte von vorzugsweise 30 bis 240 $kg/m^3$, und mit einem spezifischen Oberflächenwiderstand von nicht mehr als $10^5$ Ohm, vorzugsweise von nicht mehr als $10^4$ Ohm. Zusätzlich zu seiner hervorragenden elektrischen Leitfähigkeit weist der vernetzte Polyolefinschaum gemäß der Erfindung eine hohe Zugfestigkeit und Bruchdehnung, sehr niedrige Wasseraufnahme und ausgezeichnete Flexibilität auf und ist damit leicht unter dem Einfluß von Wärme und Druck in einfache oder auch komplexe Gestalt mittels einer Vielzahl herkömmlicher Verformungstechniken einschließlich der Vakuum- und Druckluftverformung zu formen. Er ist desweiteren unter Anwendung von Wärme verschweißbar und kann mit sich selbst oder anderen Materialien, beispielsweise Kunststoffen, Papier, Metall, Holz usw. direkt oder mittels Haftvermittler verbunden oder laminiert werden.

Für die Herstellung des Vorformlings gemäß der Erfindung wird bevorzugt eine Mischung enthaltend 100 Gew.-Teile Polyolefinharz aus 0 bis 100 Gew.-% Polyethylen und 100 bis 0 Gew.-% eines Ethylenmischpolymerisates, sowie 12 bis 20 Gew.-Teile eines leitfähigen Rußes,

-5-

0,1 bis 1,5 Gew.-Teile eines Vernetzungsmittels und
2 bis 15 Gew.-Teile eines chemischen Treibmittels,
dessen Zerfallstemperatur über derjenigen des Vernetzungsmittels liegt, eingesetzt. Insbesondere werden Polyethylene niedriger Dichte und/oder ein Mischpolymerisat
aus Ethylen und einem olefinisch ungesättigten Monomer,
das copolymerisierbar mit Ethylen ist, wie z.B. Vinylacetat, Propylen, Buten, Butadien, Acrylsäure etc. eingesetzt, wobei Vinylacetat das bevorzugte Monomer ist.
Das Ethylenmischpolymerisat aus einem monomeren Gemisch
sollte mindestens 60 Gew.-% Ethylen und mindestens
5 Gew.-% eines olefinischen ungesättigten Momomers enthalten, das so ausgewählt ist, daß es zur Erhöhung der
Flexibilität des Schaumstoffes beiträgt. Hier ist das
Ethylen- Vinylacetat - Mischpolymerisat besonders geeignet, da es zur Verbesserung der Flexibilität und
Biegsamkeit und Verformbarkeit des hergestellten Schaumes
beiträgt. Bevorzugt sollte hierbei das Mischpolymerisat
aus einem monomeren Gemisch enthaltend mindestens 60 Gew.-%
Ethylen und 5 bis 40 Gew.-% Vinylacetat eingesetzt werden.

Bevorzugt wird ein Schaum aus einer Mischung von Polyethylen und einem Ethylen-Vinylacetat-Mischpolymerisat
hergestellt.

Eine bevorzugte Zusammensetzung der Mischung zum Herstellen des Vorformlings enthält auf 100 Gew.-Teile
Polyolefine, die vorzugsweise 20 bis 80 Gew.-%, und
noch bevorzugt 40 bis 60 Gew.-% mindestens eines Polyethylens niedriger Dichte und 80 bis 20 Gew.-%, insbesondere 60 bis 40 Gew.-% mindestens eines Ethylenmischpolymerisates, insbesondere eines Ethylen-Vinyl-
acetad-Mischpolymerisates, 12 bis 25 Gew.-Teile leitender
Ruß, 0,1 bis 1,5 Gew.-Teile eines Vernetzungsmittels und 2 bis 15 Gew.-Teile eines Treibmittels.

Das bevorzugte Polyethylen niedriger Dichte weist ein spezifisches Gewicht zwischen etwa 0,91 und 0,93 g/cm$^3$ (wie gemäß ASTM D- 1505-68 festgelegt) und einen Schmelzindex MFI (190/2,16) gemäß DIN 53735/ASTM D-1238-79 von etwa 10 bis 40 g/10 min, vorzugsweise 15 bis 30 g/10 min auf. Es können auch Gemische aus Polyethylenen niedriger Dichte verwendet werden, die unterschiedliche Schmelzindizes aufweisen, allein oder zusammen mit Mischpolymerisaten, sofern der sich ergebende Schmelzindex der Mischung wiederum innerhalb des angegebenen Bereichs liegt.

Das Ethylenmischpolymerisat, das in dem erfindungsgemäßen Verfahren Anwendung finden soll, sollte ebenfalls einen Schmelzindex MFI (190/2,16) von etwa 10 bis 40, vorzugsweise 20 bis 25 g/ lo min haben. Die erfindungsmäßig geeigneten Homopolymerisate und Mischpolymerisate des Ethylens sind handelsüblich erhältlich.

Als Vernetzungsmittel werden bevorzugt organische Peroxide, wie z.B. Dicumylperoxid, Di-tert -butylperoxid, 2,5-Dimenthyl- 2,5-di (tert -butyl peroxy) hexan, Tertbutyl-hydro-peroxid, Cumyl-tert-butyl-peroxid und dgl. eingesetzt. Die Vernetzungsmittel sind so auszuwählen, dass ihre Zerfallstemperatur niedriger ist als diejenige des eingesetzten Treibmittels. Die erforderliche Menge des Treibmittels und des Vernetzungsmittels sind abhängig von den eingesetzten Polyolefinen und der gewünschten Dichte des Schaumstoffes. Im allgemeinen wird das Vernetzungsmittel in einer Menge von 0,5 bis 1,5 Gew.- Teilen pro 100 Teile Polyolefin und vorzugsweise zwischen 0,85 und 1,0 Gew.-Teilen zugesetzt. Das be-

0186887

vorzugte Vernetzungsmittel Dicumylperoxid hat beispielsweise eine Zerfallstemperatur von etwa 170°C, bei der die Vernetzung einsetzt.

Für das erfindungsgemäße Verfahren wird bevorzugt ein chemisches Treibmittel benutzt, mit dem die Dichte des herzustellenden Schaumes gesteuert wird und das eine Zerfallstemperatur aufweist, die höher ist als der Erweichungspunkt des Polyolefins und auch höher als die Zerfallstemperatur des eingesetzten Vernetzungsmittels. Das Treibmittel wird im allgemeinen in einer Menge von 2 bis 15 Gew.-Teilen pro 100 Gew.-Teile Polyolefin eingesetzt, vorzugsweise 5 bis 15 Gew.-Teile. Geeignete chemische Treibmittel sind Azodicarbonamid, Dinitrosopentamethylentetramin , Bariumazodicarboxylat, Hydroazodicarbonamid, p-Toluolsulfonyl- Semicarbazid, Trihydrazintriazin und dergl. Das bevorzugte chemische Treibmittel ist Azodicarbonamid, das eine Zerfallstemperatur von über 190 C hat, die also höher ist als die des bevorzugt gleichzeitig benutzten Vernetzungsmittels Dicumylperoxid.

Die bei der Herstellung von Polyolefinschäumen bekannten angewandten Additive, wie z.B. Lichtschutzmittel, Pigmente, Füllstoffe, Flammverzögerungsmittel , Entformungsmittel, Schmiermittel oder dergl. können ebenfalls der Mischung zum Herstellen von leitfähigen Schäumen gemäß der Erfindung beigefügt werden.

Der elektrisch leitfähige Polyolefinschaum gemäß der Erfindung wird in einem kontinuierlichen Verfahren hergestellt, wobei das Polyolefin, der elektrisch leitfähige Ruß, das Vernetzungsmittel und das Treibmittel in einem Extruder plastifiziert werden bei einer

Temperatur,die unter den Zerfallstemperaturen des Vernetzungsmittels und des Treibmittels liegt, aber über dem Schmelzpunkt des Polyolefins, wobei ein noch nicht vernetzter und noch nicht geschäumter Vorformling, der auch als Matrix bezeichnet wird, üblicherweise in Bandform extrudiert wird. Diese Matrix kann noch kalibriert werden, um eine einheitliche Dicke zu erzielen, was beispielsweise beim Durchlaufen eines von Rollen gebildeten Walzenspaltes erfolgt. Die Matrix wird bei Umgebungsluft abgekühlt, vorzugsweise bis auf Raumtemperatur und der so abgekühlte Vorformling wird dann der mehrstufigen Erwärmung zugeführt, um das Vernetzen und Verschäumen zu bewirken. Dieses erfolgt üblicherweise in einem Heizofen mit mehreren Heizzonen, die kontinuierlich oder abgeschottet ineinander übergehen können.

Eine gute Verschäumung und Vernetzung der Matrix erhält man, wenn die Mischung bei einer Temperatur zwischen 125 und 160$^o$C extrudiert wird, so daß kein vorzeitiges Aufschäumen und Vernetzen eintreten kann, und dann der Vorformling bzw. die Matrix in der ersten Stufe beim Durchlaufen eines Heizofens in der ersten Zone desselben auf eine Anfangstemperatur von etwa zwischen 175 bis 200$^o$C erwärmt wird, um das Vernetzungsmittel zu aktivieren.Hierbei werden ca. 70 bis 80% des Vernetzungsmittels zur Reaktion gebracht. Dann wird in der zweiten Stufe, direkt anschließend, in der ..  nächsten Zone des Heizofens, die Matrix auf eine darüberliegende Temperatur gebracht, um das Vernetzen zu beenden und das Verschäumen in die Wege zu leiten, beispielsweise bei einer Temperatur zwischen etwa 200 und 220$^o$C. Schließlich wird anschließend in der dritten Stufe, beispielsweise in der  dritten Zone des Heizofens,die Matrix auf eine wiederum höher als die Temperatur der zweiten Stufe liegende Temperatur gebracht, um das Verschäumen zu vollenden, beispielsweise eine Temperatur zwischen etwa 200 und 240°C. Die so hergestellte vernetzte Schaumbahn auf Basis von Polyolefinen verläßt die Heizzonen und wird beispielsweise über wassergekühlte Walzenpaare abgezogen und zu einer Aufwickelstation geführt.

Die Ethylenpolymere sind im hergestellten Schaum nicht völlig vernetzt, dass Ausmaß oder der Grad der Vernetzung liegt im Bereich von etwa 65 bis 80%, vorzugsweise etwa 70 bis 75%, ausreichend, um flexible biegsame elektrisch leitfähige überwiegend geschlossenzellige Schaumbahnen zu liefern, die dann leicht in Formkörper wie Kästen, Mulden usw. beispielsweise durch Vakuumverformung geformt werden können.

Der Vernetzungsgrad wird dabei als Gelgehalt in Gew.-% Löslichkeit in Decalin nach ASTM-D 2765-68 bestimmt.

Für die Durchführung des Verfahrens kann es von Vorteil sein, wenn die Additive, wie der leitfähige Ruß, Vernetzungsmittel und Treibmittel, jeweils mit etwas Polyolefin vorgemischt und zu kleinen Granulaten geformt werden und dann zusammen mit dem restlichen Polyolefin der Extrusion zugeführt werden. Diese Verfahrensweise vermindert sowohl die Probleme der Luftverschmutzung am Standort des Extruders, insbesondere im Hinblick auf den leitfähigen Ruß, der an einem anderen Ort vorcompoundiert werden kann, und erleichtert das Dosieren und homogene Vermischen der Materialien.

Bei der Herstellung des Vorformlings aus der vernetzbaren und verschäumbaren Mischung durch Extrusion ist besondere Sorgfalt darauf zu verwenden, dass ein vorzeitiges Vernetzen und Verschäumen während der Extrusion vermieden wird, d.h. es ist insbesondere die Temperatur im Extruder, d.h. die Plastifizierungstemperatur der Mischung im Extruder zu überwachen und ihre Erhöhung auf einen unzulässigen Wert zu vermeiden. Es wurde gefunden, dass die Plastifizierungstemperatur im Extruder in einem Bereich zwischen etwa 125°C Mindesttemperatur und 160°C als obere Grenze eingehalten werden muß, um eine gute Matrix zu erhalten, die beim späteren Vernetzen und Verschäumen zu einem gleichmäßigen homogenen Produkt führt. Bei der Oberwachung und Aufrechterhaltung dieses Plastifiziertemperaturbereiches im Extruder ist darauf zu achten, dass der Düsendruck, d.h. der Druck in der beispielsweise als Breitschlitzdüse ausgebildeten Düse, aus der das Extrudat austritt, nicht zu hoch wird. Der Zusatz von Ruß zu der Polyolefinmischung, um einen elektrisch leitfähigen Schaum herzustellen, bewirkt eine Erhöhung des Düsendruckes im Extruder. Desweiteren wurde gefunden, dass auch das Molekulargewicht der Polyolefine einen direkten Einfluß auf den Düsendruck nimmt, ein höheres Molekulargewicht, dem eine höhere Schmelzviskosität entspricht, erhöht ebenfalls den Düsendruck. Für die Durchführung des erfindungsgemäßen Verfahrens zum Herstellen eines elektrisch leitfähigen Schaums wurde unter Berücksichtigung der vorgenannten Tatsachen gefunden, dass bei einem Düsendruck von mehr als etwa 172,5 bar bei einem Durchsatz von 225 kg/h bereits ein vorzeitiges Vernetzen im Extruder eintritt, was sich durch Blasenbildung des nachfolgend geschäumten Produktes bemerkbar macht. Ein Düsendruck im Extruder von etwa 69 bar bei gleichem Durchsatz hingegen war jedoch zu niedrig, und eine unvollständige

0186887

Plastifizierung und unvollständige Homogenisierung der Mischung war die Folge. Ein qualitativ guter Schaum läßt sich jedoch erfindungsgemäß bei einem Düsendruck des Extruders zwischen etwa 90 bis 140 bar bei einem Durchsatz von 225 Kg/h herstellen.

Bei der Durchführung des erfindungsgemäßen Verfahrens hat sich herausgestellt, dass eine unter 10 Gew.-Teilen pro 100 Gew.-Teilen Polyolefin liegende Menge an Ruß nicht zu dem gewünschten spezifischen Oberflächenwiderstand des Schaumes führt. Eine über mehr als 25 Gew.-Teilen Ruß pro 100 Gew.-Teilen Polyolefin liegende Menge hingegen erhöht die Schmelzviskosität der Mischung in unzulässiger Weise und erschwert damit die Extrusion, und geht über diejenige Mindestrußmenge hinaus, die notwendig ist, um die geforderte elektrische Leitfähigkeit zu erhalten. Die Leitfähigkeit des herzustellenden Schaumes wird durch eine Menge von etwa 12 bis 25 Gew.-Teilen, bevorzugt 15 bis 20 Gew.-Teilen Ruß pro 100 Gew.-Teilen Polyolefin erzielt.

Es wurde bereits darauf hingewiesen, dass der Schmelzindex bzw. das Molekulargewicht des Polyolefins ebenfalls den sich einstellenden Düsendruck im Extruder beeinflußen. Es haben die erfindungsgemäß vorgeschlagenen Polyolefine mit eingegrenzten Bereichen der Schmelzindizes sich als besonders geeignet für die Herstellung des elektrisch leitfähigen Schaums erwiesen. Hierbei wird der Schmelzindex des ausgewählten Polyolefins, insbesondere Polyethylens mit niedriger Dichte,auch durch den Gehalt an leitfähigem Ruß in der Mischung und desweiteren durch den Gehalt an Vernetzungs- und Treibmitteln, die temperaturempfindlich sind, bestimmt. Wenn der Schmelzindex des Polyethylens zu niedrig gewählt wird, beispielsweise niedriger als 10, dann erhöht sich die Schmelztemperatur im Extruder in Folge der Erhöhung der Schmelzviskosität und der damit verbundenen Erhöhung des Düsendruckes im Extruder.Der dann extrudierte Vorformling führt zu einem Schaum, der durch eine stauende Vernetzung blasig wird. Wird der Schmelzindex des Polyethylens zu hoch angesetzt, beispielsweise höher als 40, só wird der aus dem Vorformling hergestellte Schaum während der Aktivierung des Treibmittels zusammenfallen.

Der Ausdruck "Schmelzindex von Polyethylen mit niedriger Dichte" bezieht sich hier auf einen durchschnittlichen Schmelzindex aller Polyethylene in der Mischung. Es kann z.B. eine kleinere Menge eines Polyethylens mit einem Schmelzindex von 6 oder weniger mit einem großen Anteil an Polyethylen mit einem Schmelzindex von 40 vermischt werden, um einen durchschnittlichen Schmelzindex von 20 zu ergeben, der zu einem guten Schaum führen würde. Im allgemeinen läßt sich ein Polyethylen, das einen Schmelzindex im mittleren Bereich des angegebenen Bereichs aufweist, am Besten gemäß der Erfindung verarbeiten und einsetzen. Analoge Überlegungen gelten für die Auswahl des Ethylenmischpolymerisats.

Als leitfähige Ruße können gemäß der Erfindung beispielsweise Furnace-Ruße, Acetylen-Ruße, Channel-Ruße oder Thermal-Ruße eingesetzt werden. Besonders wirksame Ruße sind die sehr gut elektrisch leitfähigen, nicht verstärkenden Furnace-Ruße, die Teilchengröße unter $10^{-6}$ m aufweisen. Diese bevorzugten Rußarten haben im allgemeinen eine durchschnittliche Teilchengröße nicht größer als 30 nm und eine effektiv wirksame BET-Oberfläche von mehr als 900 $m^2$/g.

0186887

Die mit dem erfindungsgemäßen Verfahren herstellbaren elektrisch leitfähigen vernetzten Polyolefinschaumstoffe, insbesondere in Bahnenform, können zum Herstellen von Formkörpern durch Preßformen unter Anwendung von Druck und Wärme bevorzugt verwendet werden. Solche Produkte sind beispielsweise Verpackungen für elektrische und elektronische Bauteile, die gegen statische Aufladungen zu schützen sind.

Das erfindungsgemäße kontinuierliche Verfahren zum Herstellen des elektrisch leitfähigen vernetzten Polyolefinschaums wird durch nachfolgende Beschreibung mit Zeichnung und Beispielen näher erläutert. Es zeigen

Figur 1        eine schematische Darstellung einer Anlage zum Herstellen des Vorformlings durch Extrusion

Figur 2        eine schematische Darstellung der Anlage zum Verschäumen und Vernetzen des Vorformlings

Figur 3        eine perspektivische Ansicht eines Formkörpers in Gestalt einer Verpackung aus geformtem elektrisch leitfähigem vernetztem Schaum.

In der in der Figur 1 schematisch dargestellten Anlage wird in einem ersten Schritt kontinuierlich der unvernetzte, unverschäumte Vorformling, der jedoch vernetzbar und verschäumbar ist, hergestellt. Beispielsweise wird Granulat aus einem Polyethylen-Konzentrat, das elektrisch leitfähigen Ruß enthält, Granulat aus Polyethylen, das ein Vernetzungsmittel enthält und Granulat aus Polyethylen und/oder Ethylen-Vinylacetatmischpolymerisat, die ein Treibmittel enthalten, dosiert aus den Einzeltrichtern 2,3,4 in den gemeinsamen Einfülltrichter 5 des Schneckenextruders 1 gefüllt. Die Masse wird in dem Schneckenextruder bei einer Temperatur im Bereich von etwa 150°C plastifiziert und durch die Breitschlitzdüse 1a in Form eines endlosen Bandes 6 extrudiert, das den unvernetzten, unverschäumten, jedoch schäumbaren und vernetzbaren Vorformling darstellt. Das den Extruder verlassende Band 6 wird durch einen von dem Walzenpaar 7 gebildeten Walzenspalt zum Glätten und Kalibrieren geführt, um einen Vorformling, auch Matrix genannt, einer einheitlichen Dicke, von z.B. 1/8 oder 1/2 inch zu liefern. Anschließend wird die Matrix durch eine Kühleinrichtung 8 geführt, in der die Matrix beim Durchlaufen mittels Kühldüsen, beispielsweise mittels Kühlluft betrieben, bis auf Raumtemperatur abgekühlt wird und anschließend auf die Abzugsrolle 9 aufgewickelt wird. Die aufgewickelte Matrix 6 kann dann für einen oder mehrere Tage gelagert werden, bis sie für die Herstellung des elektrisch leitfähigen Schaumes benötigt wird. Sie kann auch direkt weiter durch Vernetzen und Verschäumen zu dem fertigen Schaum verarbeitet werden und von der Kühleinrichtung 8 direkt zu der Vernetzungs- und Verschäumungsanlage gemäß Figur 2 geführt werden.

Die Verschäumungs- und Vernetzungsanlage gemäß Fig. 2 besteht im wesentlichen aus dem Mehrzonen-Heizofen 10, dessen Inneres beispielsweise durch flexible Trennwände, die im Ofen vertikal hängend angeordnet sind, in drei Zonen I,II,III unterteilt ist. Das endlos umlaufende Förderband 11, beispielsweise ein Maschendrahtband, transportiert die aufliegende Matrix 6, die entweder von der Abzugsrolle 9 abgewickelt wird oder direkt von der Kühleinrichtung 8 weitergeführt ist, in den Heizofen 10.

Die Bandgeschwindigkeit des Transportbandes 11 wird so bemessen, dass eine ausreichende Verweilzeit der Matrix 6 in jeder Heizzone des Heizofens 10 gewährleistet ist, um die erforderliche Vernetzung und das Verschäumen in der gewünschten Qualität zu ermöglichen. Beim Durchlaufen der Zone I wird die Matrix 6 auf eine Temperatur gebracht, die hoch genug ist, um das Vernetzungsmittel zu aktivieren, jedoch mit Sicherheit noch nicht zu einer Aktivierung des Treibmittels führt. In der Zone II wird die Temperatur weiter erhöht, gegenüber der Zone I, um nunmehr das Treibmittel zu aktivieren und die Vernetzungsreaktion zum Abschluß zu bringen. Dann wird anschließend in Zone III die Temperatur gegenüber der Zone II weiter erhöht, um die Bildung des Schaumes, d.h. die vollständige Verschäumung zu einer einheitlichen überwiegend geschlossenzelligen Struktur bei einer Dicke der entstehenden Schaumbahn von etwa 1/4 bis 5/8 inch oder mehr zu vollenden. Das erfindungsgemäße Verfahren gestattet eine Aufschäumung des Matrix-oder Vorformlingsmaterials 6 um das 1,5 bis 3fache gegenüber der Matrixdicke.

Die den Heizofen 10 als Schaumbahn 6a verlassende aufgeschäumte und vernetzte Matrix wird beispielsweise durch ein Walzenpaar 12 geführt, das aus gekühlten Chromwalzen besteht und die Aufgabe der Kühlung, Glättung und des Abziehens der Schaumbahn 6a übernimmt. Anschließend wird die Schaumbahn 6a beispielsweise auf eine Abzugsrolle 13 aufgewickelt und kann so gelagert und der Weiterverarbeitung zugeführt werden.

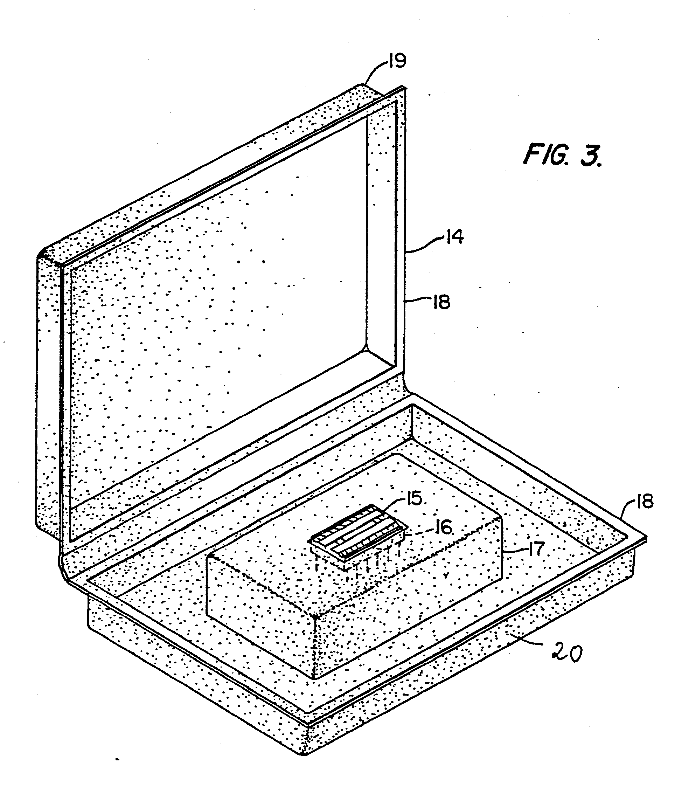

Beispielsweise kann der nach dem erfindungsgemäßen Verfahren hergestellte elektrisch leitfähige vernetzte Polyolefinschaum, der sehr leicht ist, und flexibel und außerordentlich gut in der Wärme verformbar, zu komplex

geformten Teilen, beispielswèise mittels Vakuumverformung, verarbeitet werden. Hierbei wird beispielsweise ein entsprechender Zuschnitt der Schaumbahn auf eine Patrize oder Matrize, die auf eine Formtemperatur von etwa 130 bis 160°C aufgeheizt ist, aufgespannt und verformt. In der Figur 3 ist ein Beispiel eines solchen Formteiles dargestellt. Hierbei handelt es sich als Ausführungsbeispiel um eine Verpackung, die einen Schutz nach Art eines Faraday'schen Käfigs für ein elektronisches Gerät 15, das sich in einer Vertiefung 16, die sich im erhabenen Mittelteil 17 der Verpackung 14 befindet, darstellt. Die Verpackung 14 weist das Unterteil 20 und Deckelteil 19, die längs einer Seitenkante miteinander verbunden sind, auf die beide mit umlaufenden Rändern 18 ausgebildet sind, die mittels Klebemittel oder Klebeband beim Schließen abgedichtet werden können. Wenn das Deckelteil auf dem Unterteil 20 aufliegt, ist das innenliegende elektronische Gerät 15 vollständig von einer elektrisch leitenden Abschirmung eingekapselt.

Nachfolgend werden einige Beispiele sowie Vergleichsbeispiele zur Erläuterung der Erfindung beschrieben, wobei verschiedene Rezepturen mit unterschiedlichen Mengen an Polyolefinen, Vernetzungsmitteln und Treibmitteln ausgewertet wurden, wobei die Anteile und Prozentsätze sich auf Gewichte beziehen, falls nichts anderes dargelegt ist.

Vergleichsbeispiele 1 bis 5

Es wird eine Anlage des Typs gemäß Fig.1 verwendet und Granulate eines Konzentrats aus Polyethylen und leitfähigem Ruß sowie Granulate aus Polyethylen und/oder Ethylen-Vinylacetat-Mischpolymerisat, die leitfähigen Ruß bzw. Azodicarbonamid bzw. Dicumylperoxid enthalten,

0186887

die in einem Laborextruder mit 50 mm Schneckendurchmesser   bei einer Temperatur im Bereich von 140 bis 160°C plastifiziert und zu einem Vorformling in Gestalt einer Platte extrudiert. In einigen Fällen werden auch zusätzliche Granulate, die nur aus Polyethylen und/oder Ethylen-Vinylacetat-Mischpolymerisat bestehen, dem Extruder gefüttert. Der extrudierte Vorformling wird noch geglättet und man erhält eine Platte von 1/16 bis 1/4 inch Dicke. Die Platten werden in einem Heizofen, der stufenweise entsprechend den drei Zonen des Heizofens um drei verschiedene Temperaturbereiche aufgeheizt wird, erwärmt, wobei die erste Stufe eine Temperatur von 180°C, die zweite Stufe eine Temperatur von 200°C und die dritte Stufe eine Temperatur von 220°C erreicht.

In der Tabelle 1 sind die Vergleichsbeispiele 1 bis 5 mit ihren Zusammensetzungen und den gemessenen Werten des Oberflächenwiderstandes und der Schaumdichte aufgeführt. Der gemäß Vergleichsbeispiel 1 erhaltene Schaum ist nicht leitfähig, da die zugesetzte Menge an leitfähigem Ruß zu gering war, und er war zudem spröde und zeigte eine glasige Oberfläche. Der gemäß Vergleichsbeispiel 2 hergestellte Schaum hatte bereits eine ausreichende Leitfähigkeit, jedoch noch ein relativ hohes Raumgewicht und   ließ sich schlecht extrudieren.
Infolge der sehr niedrigen Schmelzindizes der ausgewählten Polyolefine wurde ein hoher  Düsendruck von 190 bar  in dem eingesetzten Laborextruder, der einen Schneckendurchmesser von 50 mm  hatte bei einem Durchsatz von 27 Kg/h , aufgebaut.

Bei dem gemäß Vergleichsbeispiel 3 hergestellten Schaum konnte die Schaumdichte durch entsprechende Mengen von Azodicarbonamid reduziert werden, jedoch erzeugte auch diese Mischung einen zu hohen Düsendruck im Extruder.

Mit der Rezeptur gemäß Vergleichsbeispiel 4 wurde ein leitfähiger Schaum mit relativ niedriger Schaumdichte erzeugt, die jedoch ebenfalls noch einen viel zu hohen Düsendruck von 190 bar im Extruder erzeugte. Dies bedeutet jedoch eine Minderung der Schaumqualität bei der kontinuierlichen Herstellung.

Bei der Rezeptur gemäß Vergleichsbeispiel 5 konnte der Düsendruck bereits auf 150 bar gesenkt werden, was jedoch für eine kontinuierliche Produktion mit einem Extruder mit einer Stundenleistung von über 200 kg/h noch nicht ausreichend niedrig ist.

Beispiele 6 bis 11

Für diese Beispiele für ebenfalls ein Laborextruder mit einer Schnecke von 5o mm Durchmesser wie bei den Versuchsbeispielen benutzt, ferner wurden Versuche mit einem großen Extruder mit einer Schnecke mit einem Durchmesser von 150 mm durchgeführt. Die Rezepturen sowie die gemessenen Werte des Oberflächenwiderstandes und der Schaumdichte des hergestellten Schaumes sind in der Tabelle 2 aufgeführt.

Mit einer Rezeptur gemäß Beispiel 6 konnte ein leitfähiger Schaumstoff mit einer niedrigen Dichte extrudiert werden, der jedoch trotz des Einsatzes eines Konzentrats aus einem Polyethylen mit niedriger Dichte mit einem Schmelzindex von 20 noch einen Düsendruck im Extruder von über 140 bar aufbaute und damit an der Grenze des für industrielle großtechnische Fertigung zulässigen liegt.

Gemäß Beispiel 7 wurde für das Treibmittelkonzentrat nur noch ein Polyethylen niedriger Dichte mit einem Schmelzindex von 20 in höherer Konzentration eingesetzt . Dies führte zusammen mit zusätzlichen Anteilen eines Ethylen- Vinylacetat-Mischpolymerisats mit einem Anteil von 18 Gew.-% Vinylacetat mit einem Schmelzindex von 8 zu verbesserten Extrusionsbedingungen und der Reduzierung des entstehenden Düsendruckes auf Werte unter 120 bar.

Die Rezeptur gemäß Beispiel 7 wurde anschließend im Beispiel 8 mit einem Schneckenextruder mit einem Schneckendurchmesser von 150 mm bei einem Durchsatz von 225 Kg/h produktionsmäßig gefahren. Die Rezeptur verursachte eine relativ hohe Stromaufnahme und der Düsendruck erhöhte sich im Verlaufe eines $1^3/_4$ Stunden währenden Versuches langsam aber stetig, wobei er am Ende im Bereich von 180 bar lag und damit die so her - gestellte Matrix dann nicht mehr zu einem gleichmäßigen Schaum vernetzt und verschäumt werden konnte. Vielmehr wies der Schaum größere Zellen als der gemäß Beispiel 7 hergestellte auf und war am Ende des Versuches mit Blasen durchsetzt. Hieraus geht hervor, wie schwierig es ist, Laborergebnisse verfahrenstechnisch in den Produktionsmaßstab zu überführen.

Gemäß Beispiel 9 wurde ein leitfähiges Rußkonzentrat hergestellt, bei dem ein Ethylen-Vinylacetat-Mischpolymerisat verwendet wurde, das 22 Gew.-% Vinylacetat enthielt und dieses wurde gleichmäßig mit Polyethylen niedriger Dichte mit einem Schmelzindex von 20 vermischt. Die Mischung wurde wiederum auf einem Extruder mit einer Schnecke von 150 mm bei einem Durchsatz von 225 Kg/h gefahren und der sich im Düsenkopf aufbauende Düsendruck lag im Bereich von etwa 100 bar und der hergestellte Schaum hatte ein außerordentlich gutes Aussehen und

0186887

Qualität bei einer ausgezeichneten elektrischen Leitfähigkeit.

Gemäß den Beispielen 1o und 11 wurden weitere Rezepturen
zur Herstellung eines Schaums in einem Extruder im
industriellen Ausmaß gemäß den Beispielen 9 und 8 hergestellt und ausgewertet. Insgesamt wird deutlich, dass
der herstellbare Schaum mit Verfahrenstechnik dann
zu guten Ergebnissen führen, wenn Polyolefine mit einem
höheren Schmelzindex, vorzugsweise im Bereich von 15 bis
25, anstelle von Polyolefinen mit einem niedrigen Schmelzindex verwendet werden.

Beispiel 12

Eine Schaumplatte, die gemäß Beispiel 9 erhalten wurde,
mit den Maßen 9x12 inch, wird mittels einer Vakuumpreßform vom Matrizentyp, wobei die Matrize auf eine Temperatur von 150°C erwärmt ist, zu einer elektrisch
leitfähigen Verpackung, wie sie in der Fig. 3 gezeigt ist, geformt. Die hergestellte Verpackung weist
eine sehr gute Konstanz des spezifischen Oberflächenwiderstandes auf, deren Werte weniger als 15% über die
Fläche schwankten. In allen Fällen betrug der gemessene
spezifische Oberflächenwiderstand weniger als $1 \times 10^4$ Ohm.

Beispiel 13

In einem Laborextruder gemäß Beispiel 6 wurde ein schäumbarer vernetzbarer Vorformling hergestellt aus einer
Rezeptur, die zu 100% Polyethylen enthält. Die Rezeptur
hatte folgende Zusammensetzung:

| Polyethylenharz mit MFI 20 | 1oo Teile |
|---|---|
| Dicumylperoxid | 1 Teil |
| Azodicarbonamid | 7 Teile |
| Ketchenblack-EC | 15 Teile |
| | |
| gesamte Gewichtsanteile | 123 Teile |
| Schaumdichte $kg/m^3$ | 144 |

Eine Untersuchung des aus dem Vorformling durch Vernetzten und Verschäumen hergestellten Schaumes ergab, dass das Material sehr brüchig war und auch schwierig im Produktionsprozess zu verarbeiten. Schaumstoffe mit solchen Raumgewichten können z.B. als Tischmatte verwendet werden.

### Beispiel 14

In einem Laborextruder gemäß Beispiel 6 wurde ein verschäumbarer und vernetzbarer Vorformling aus der nachfolgenden Rezeptur hergestellt:

| Ethylen-Vinylacetat mit 9% Vinylacetat MFI 7 | 100 Teile |
|---|---|
| Dicumylperoxid | 1 Teil |
| Azodicarbonamid | 7 Teile |
| Ketchenblack-EC | 15 Teile |
| | |
| gesamte Gewichtsanteile | 123 Teile |
| Schaumdichte $Kg/m^3$ | 95 |

Bei der Verarbeitung einer Rezeptur, die zu 100% aus Ethylen-Vinylacetat-Mischpolymerisat als Polyolefin besteht, wurde festgestellt, dass sich Mischungen aus Polyethylen niedriger Dichte und Ethylen-Mischpolymerisaten besser verarbeiten lassen, insbesondere besser extrudieren lassen zu dem Vorformling, um einen elektrisch leitfähigen Polyolefinschaum zu erhalten. Auch die Verarbeitbarkeit sowohl während des Extrudierens als auch während des Kühlens als auch während der späteren Verformung des Schaumstoffes sind bei Gemischen aus Polyethylen und Ethylen-Mischpolymerisaten besser als bei reinen Ethylen-Vinylacetat-Schäumen.

-23-

Tabelle 1

| Vergleichsbeispiel Nr. | 1 | 2 | 3 | 4 | 5 |
|---|---|---|---|---|---|
| Polyethylen MFI 2.0 | 39.3 | 19.2 | 20.0 | 18.1 | 18.1 |
| MFI 20.0 | 60.7 | -- | -- | -- | 14.7 |
| Ethylen-Vinylacetat mit 9% VA, MFI 8.0 | -- | 61.5 | 73.9 | 73.4 | 58.8 |
| mit 18% VA, MFI 8.0 | -- | -- | -- | -- | -- |
| mit 18% VA, MFI 2.5 | -- | 19.3 | 6.1 | 8.5 | 8.4 |
| mit 22% VA, MFI 23 | -- | -- | -- | -- | -- |
| Ketchenblack-EC | 6.0 | 12.6 | 15.0 | 15.0 | 15.0 |
| Azodicarbonamid | 5.6 | 4.0 | 7.0 | 8.0 | 8.0 |
| Dicumylperoxid | 1.2 | 1.25 | 1.25 | 1.02 | 1.02 |
| gesamte Gewichtsanteile | 112.8 | 117.85 | 123.25 | 124.02 | 124.02 |
| Oberflächenwiderstand (Ohm) | $10^{15}$ | $<10^4$ | $<10^4$ | $<10^4$ | $<10^4$ |
| Schaumdichte (kg/m$^3$) | 144 | 200 | 128 | 95 | 95 |

Anmerkung:

MFI nach DIN 53735/ASTM D-1505-68 als MFI (190/2,16) gemessen

0186887

-24-

Tabelle 2

| Beispiel Nr. | 6 | 7 | 8 | 9 | 10 | 11 |
|---|---|---|---|---|---|---|
| Polyethylen | | | | | | |
| MFI 2.0 | 4.8 | -- | -- | -- | -- | -- |
| MFI 20.0 | 12.6 | 16.9 | 16.9 | 54.8 | 61.3 | 61.3 |
| Ethylen-Vinylacetat | | | | | | |
| mit 9%VA, MFI 8.0 | 73.8 | 74.2 | 74.2 | -- | | |
| mit 18%VA, MFI 8.0 | -- | 8.9 | 8.9 | 8.6 | 3.4 | 3.48 |
| mit 18% VA, MFI 2.5 | 8.7 | -- | -- | -- | | |
| mit 22% VA, MFI 23 | -- | -- | -- | 36.6 | 35.3 | 35.3 |
| Ketchenblack-EC | 15.0 | 15.0 | 15.0 | 15.0 | 14.0 | 14.0 |
| Azodicarbonamid | 8.0 | 8.0 | 8.0 | 8.0 | 5.0 | 4.2 |
| Dicumylperoxid | 0.95 | 0.90 | 0.90 | 1.0 | 1.0 | 1.0 |
| gesamte Gewichtsanteile | 123.85 | 123.9 | 123.9 | 124.0 | 120.0 | 119.08 |
| Oberflächen-widerstand (OHM) | $<10^4$ | $<10^4$ | $<10^4$ | $<10^4$ | $<10^4$ | $<10^4$ |
| Schaumdichte Kg/m³ | 95 | 95 | 95 | 95 | 144 | 200 |

MFI als MFI (190/2,16)

Patentansprüche

1. Verfahren zum Herstellen eines elektrisch leitfähigen vernetzten Polyolefinschaums, bei dem eine Mischung aus Polyolefinen, elektrisch leitfähigem Ruß, Treibmittel, Vernetzungsmittel und ggf. weiteren Zusatz- und Hilfsstoffen, unter Anwendung von Druck und Wärme zu einem unvernetzten, nicht verschäumten Vorformling geformt wird und der Vorformling auf eine die Zersetzung des Vernetzungsmittels und Treibmittels bewirkende Temperatur bei Atmosphärendruck erwärmt wird und dabei ein vernetzter Schaumkörper entsteht, d a d u r c h   g e k e n n z e i c h n e t, daß die Mischung bei einer unterhalb der Zersetzungstemperatur des Vernetzungsmittels und Treibmittels und über der Schmelztemperatur des Polyolefins liegenden Temperatur kontinuierlich zu einem bahnförmigen Vorformling extrudiert wird und der Vorformling stufenweise erwärmt wird, wobei jede Folgestufe eine höhere Temperatur aufweist, und die Vernetzung des Vorformlings vor dem Verschäumen einsetzt.

2. Verfahren nach Anspruch 1, d a d u r c h   g e k e n n z e i c h n e t, daß eine Mischung, enthaltend 100 Gew.-Teile Polyolefinharz aus 0 bis 100 Gew.-%, vorzugsweise 20 bis 80 Gew.-% Polyethylen und 100 bis 0 Gew.-%, vorzugsweise 80 bis 20 Gew.-% eines Ethylenmischpolymerisats, sowie 12 bis 20 Gew.-Teile eines leitfähigen Rußes, 0,1 bis 1,5 Gew.-Teile eines Vernetzungsmittels und 2 bis 15 Gew.-Teile eines chemischen Treibmittels, dessen Zerfalltemperatur über derjenigen des Vernetzungsmittels liegt, eingesetzt wird.

3. Verfahren nach Anspruch 2, d a d u r c h g e k e n n z e i c h n e t , daß ein Ethylenmischpolymerisat aus einem monomeren Gemisch enthaltend mindestens 60 Gew.-% Ethylen und mindestens 5 Gew.-% eines olefinisch ungesättigten Monomers, das mit Ethylen mischpolymerisierbar ist und zur Erhöhung der Flexibilität des Schaumstoffes beiträgt, eingesetzt wird.

4. Verfahren nach einem der Ansprüche 1 bis 3, d a d u r c h g e k e n n z e i c h n e t, daß als Ethylenmischpolymerisat ein Mischpolymerisat aus einem monomeren Gemisch enthaltend mindestens 60 Gew.-% Ethylen und 5 bis 40 Gew.-% Vinylacetat eingesetzt wird.

5. Verfahren nach Anspruch 1, d a d u r c h g e k e n n z e i c h n e t, daß Polyethylen mit einem Schmelzindex MFI (190/2,16) von 10 bis 40, vorzugsweise 15 bis 30 g/10 min und Ethylenmischpolymerisat mit einem Schmelzindex MFI (190/2,16) von etwa 10 bis 40, vorzugsweise 20 bis 25 g/10 min eingesetzt wird.

6. Verfahren nach einem der Ansprüche 1 bis 5, d a d u r c h g e k e n n z e i c h n e t, daß die Mischung bei einer Temperatur zwischen 125°C und 160°C extrudiert wird und der Vorformling in drei Stufen erwärmt wird, wobei in der ersten Stufe eine Temperatur zwischen 175 und 200°C, in der zweiten Stufe eine Temperatur zwischen 200 und 220°C und in der dritten Stufe eine Temperatur zwischen 220 und 240°C einwirkt.

0186887

7. Verfahren nach einem der Ansprüche 1 bis 6, d a d u r c h  g e k e n n z e i c h n e t, daß der extrudierte Vorformling vor der Vernetzung und Verschäumung auf Raumtemperatur abgekühlt wird.

8. Verfahren nach einem der Ansprüche 1 bis 7, d a d u r c h  g e k e n n z e i c h n e t, daß ein überwiegend geschlossenzelliger, einen Vernetzungsgrad von etwa 65 bis 80% aufweisender Schaum in Bahnen einer Dicke von etwa 5 bis 20 mm mit einem Oberflächenwiderstand kleiner $10^5$ Ohm hergestellt wird.

9. Verwendung des nach einem der Ansprüche 1 bis 8 hergestellten elektrisch leitfähigen vernetzten Polyolefinschaums zum Herstellen von elektrisch leitfähigen Formkörpern durch Preßformen unter Anwendung von Druck und Wärme.

# FIG. 1.

# FIG. 2.

0186887

FIG. 3.